# DEMANDE DE BREVET EUROPEEN

(11) **EP 0 878 613 A1**
(43) Date de publication de la demande: **18.11.1998**
(21) Numéro de dépôt: 98401171.8
(22) Date de dépôt: 15.05.1998
(51) Int. Cl.: F02B 17/00

(54) **Moteur à injection directe et allumage commandé**

(30) Priorité: 16.05.1997 FR 9706058
(71) Demandeur: RENAULT, 92109 Boulogne-Billancourt (FR)
(72) Inventeur: Floch, Alain Emile Guillaume, 91460 Marcoussis (FR)
(74) Mandataire: Fernandez, Francis

(57) **Abrégé**

La chambre de combustion pour moteur à injection directe d'essence, à bougie centrée et injecteur excentré, est délimitée par un élément de culasse (4) en forme de toit (11) dont l'arête (12) s'étend entre les orifices d'admission (7, 8) et les orifices d'échappement (9,10) avec l'injecteur excentré (16) débouchant dans la chambre (1) au niveau de l'arête. Le moteur comprend également un piston coulissant (3) dont la face supérieure comporte au moins une cavité excentrée (15) située sous l'injecteur (16) et la bougie (17).

## Description

L'invention concerne les moteurs à injection directe et allumage commandé et plus particulièrement les chambres de combustion de ces moteurs.

Par opposition aux moteurs à injection indirecte dans lesquels les injecteurs de carburant sont situés en amont de la chambre de combustion et débouchent dans les conduits d'admission, les moteurs à injection directe comportent des injecteurs de carburant débouchant directement dans les chambres de combustion des cylindres-moteur.

Un tel moteur à injection directe est par exemple décrit dans le brevet américain n° 5 127 379. Dans ce moteur, l'injecteur associé à chaque cylindre-moteur est situé sous les conduits d'admission et débouche directement dans la chambre de combustion limitée d'une part par l'élément de culasse et d'autre part par la face supérieure d'un piston coulissant dans le cylindre-moteur. Sur la face supérieure du piston est ménagée une cavité comportant une discontinuité de surface interne formant une marche au niveau de la bougie et ménageant ainsi au sein de cette cavité une zone primaire recevant le jet d'essence de l'injecteur et une zone secondaire située sous la bougie.

L'invention vise à proposer une conception radicalement différente de la chambre de combustion.

Une difficulté de conception d'une culasse en injection directe, sur le modèle des architectures de culasses des moteurs conventionnels, réside notamment dans l'implantation de l'injecteur de carburant. Un but de l'invention est de pouvoir réaliser une implantation d'injecteur utilisant une architecture classique de conduits d'admission ne nécessitant éventuellement qu'une faible réduction du diamètre des soupapes, tout en contrôlant le phénomène de stratification (transport du carburant liquide vers la bougie d'allumage) bien connu de l'homme du métier.

L'invention propose donc un moteur à combustion interne à injection directe et allumage commandé, à bougie d'allumage centrée et injecteur de carburant excentré. Selon une caractéristique générale de l'invention, ce moteur comprend un élément de culasse en forme de toit dont l'arête s'étend entre les orifices d'admission et les orifices d'échappement avec l'injecteur excentré débouchant dans la chambre au niveau de l'arête. Cette chambre comprend également un piston coulissant dont la face supérieure comporte au moins une cavité excentrée située sous l'injecteur et la bougie.

Selon une variante de l'invention, la face supérieure du piston peut ne comporter qu'une seule cavité excentrée, par exemple sensiblement en forme de demi-sphère.

Selon une autre variante de l'invention, la chambre de combustion peut être de type partagé au niveau de la face supérieure du piston.

Plus précisément, selon un mode de réalisation de l'invention, la face supérieure du piston peut comporter une première cavité excentrée située sous l'injecteur excentré et la bougie centrée, et une deuxième cavité excentrée, séparée de la première cavité par une paroi de séparation décalée latéralement par rapport à la bougie, cette paroi de séparation s'étendant sur la face supérieure du piston sensiblement perpendiculairement à l'arête de l'élément de culasse.

Ces deux cavités ont avantageusement une forme lenticulaire.

Dans ces deux variantes, l'injecteur peut être avantageusement incliné par rapport au plan vertical contenant l'arête du toit. Il peut être ainsi incliné par rapport à ce plan, de l'admission vers l'échappement ou de l'échappement vers l'admission afin d'optimiser l'angle d'incidence du jet d'injecteur par rapport à la face du piston.

Quelles que soient les variantes de l'invention, il est particulièrement avantageux que la face supérieure du piston épouse partiellement la forme de l'élément de culasse afin notamment de permettre l'obtention d'un taux de compression compris entre 10 et 12.

D'autres avantages et caractéristiques de l'invention apparaîtront à l'examen de la description détaillée de modes de réalisation de l'invention, nullement limitatifs, et des dessins annexés sur lesquels :
- les figures 1A, 1B et 1C illustrent de façon schématique, sous différentes orientations, un premier mode de réalisation d'une chambre de combustion d'un moteur à injection directe de carburant (ici d'essence) selon l'invention,
- les figures 2A, 2B et 2C illustrent de façon schématique, sous différentes orientations, un deuxième mode de réalisation d'une chambre de combustion selon l'invention.

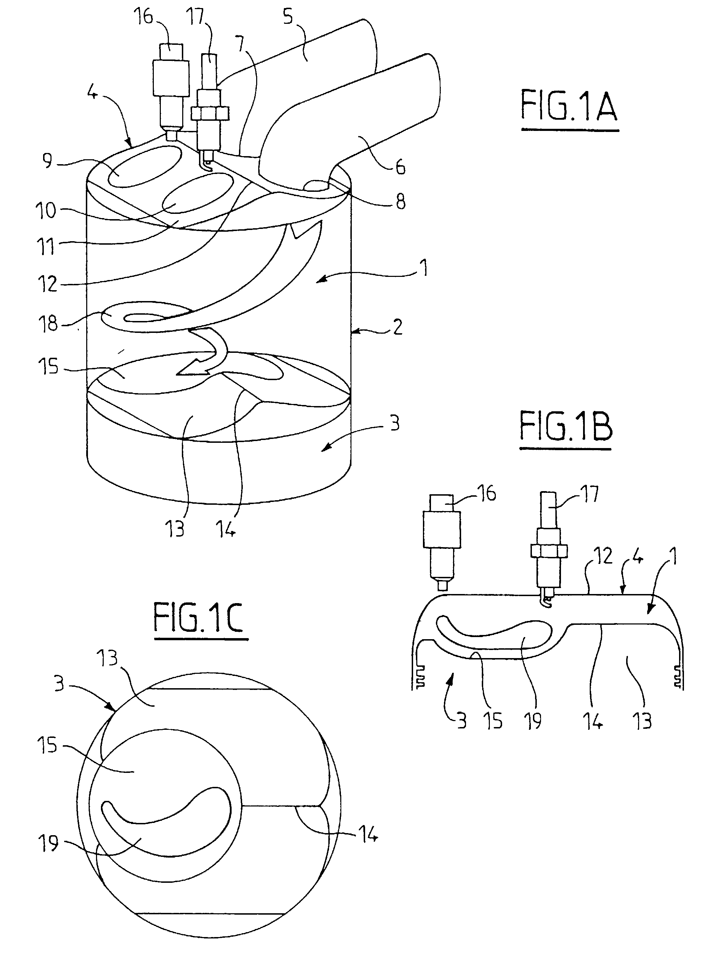

Sur la figure 1A, la référence 1 désigne une chambre de combustion selon l'invention, illustrée en perspective sur cette figure et délimitée par les parois d'un cylindre-moteur 2, la face supérieure d'un piston 3 coulissant dans le cylindre 2 et la face inférieure d'un élément de culasse 4.

L'élément de culasse 4 comporte une partie 11 en forme de toit dont l'arête 12 s'étend entre les deux orifices d'admission 7 et 8 et les deux orifices d'échappement 9 et 10. D'une façon classique, les deux orifices d'admission 7 et 8 reçoivent deux conduits d'admission 5 et 6. D'une façon analogue, sur les deux orifices d'échappement 9 et 10 sont fixés deux conduits d'échappement non représentés ici à des fins de simplification.

Une bougie 17 débouche au niveau de l'arête 12 de l'élément de culasse 4 au centre de la chambre de combustion 1, c'est-à-dire sensiblement dans l'axe du cylindre-moteur. Par ailleurs, un injecteur 16, excentré par rapport à la bougie 17, débouche au niveau de l'arête 12 dans la chambre de combustion 1. Sur la figure 1A et sur la figure 1B qui représente une vue partielle de la chambre de combustion dans le plan vertical contenant l'arête 12 du toit 11, l'injecteur 16 est disposé dans le plan vertical contenant l'arête du toit. Néanmoins, cet injecteur peut être incliné par rapport à ce plan vertical depuis l'admission vers l'échappement ou depuis l'échappement vers l'admission afin d'optimiser l'angle d'incidence du jet d'injecteur par rapport à la face du piston 3.

Selon l'invention, l'injecteur se situe dans une zone non utilisée par tout autre accessoire de la culasse. Ce positionnement peut être ainsi envisagé avec seulement une faible réduction du diamètre des soupapes. Néanmoins, en raison de l'éloignement de l'injecteur par rapport à la bougie, une adaptation de la forme de la chambre de combustion au niveau du piston est nécessaire pour contrôler la stratification, c'est-à-dire le transport du carburant liquide vers la bougie.

A cet égard, le piston 3 présente une cavité 15 excentrée latéralement (par rapport à l'axe du moteur) et située sous l'injecteur et sous la bougie. En d'autres termes, le périmètre de cette cavité inclut la trace de la bougie et de l'injecteur sur la face supérieure du piston. La courbure de cette cavité est ajustée de façon à permettre au jet d'essence provenant de l'injecteur d'atteindre la cavité quasi tangentiellement puis de diriger le jet de carburant 19 vers le point d'allumage, c'est-à-dire vers la bougie.

La cavité est de préférence un bol ayant sensiblement la forme' d'une demi-sphère. En outre, en fonction de l'inclinaison de l'injecteur par rapport au plan vertical contenant l'arête 12 du toit 11, ce bol pourra être plus ou moins ré-entrant, c'est-à-dire plus ou moins enfoncé latéralement dans le piston, par opposition à un bol à bord vertical droit.

Enfin, afin de permettre l'obtention d'un taux de compression compris entre 10 et 12, la face supérieure du piston épouse partiellement la forme de l'élément de culasse. Plus précisément, la face supérieure du piston comporte une partie latérale 13 ayant également la forme d'un toit, l'arête 14 de ce dernier venant sensiblement en vis-à-vis avec l'arête 12 du toit de la culasse lors de la position haute du piston.

Outre les caractéristiques de la chambre de combustion qui vient d'être évoquée, le transport de la phase gazeuse du carburant vers la bougie est encore améliorée par des effets convectifs aérodynamiques. En effet, la structuration d'un mouvement aérodynamique dans la chambre de combustion, persistant en fin de combustion, permet de contrôler davantage la stabilité de la distribution en carburant. En outre, la mise en rotation du mélange combustible permet d'améliorer la stabilité du moteur pour des points de fonctionnement en mélange pauvre homogène.

Plus précisément, il est prévu dans cette variante un mouvement de rotation du mélange de type "tourbillon" d'axe vertical, parallèle à l'axe du cylindre, comme illustré sur la figure par la référence 18. Ce type de mouvement aérodynamique est communément appelé par l'homme du métier "swirl" en langue anglaise. Ce mouvement de tourbillon 18 est par exemple obtenu par désactivation de l'un des deux conduits d'admission en mode de fonctionnement stratifié. Plus précisément, le moteur à injection directe comportant une chambre de combustion selon l'invention peut ainsi comporter des moyens de déconnexion de l'une des deux soupapes d'admission ou bien des moyens d'obturation de l'un des deux conduits d'admission.

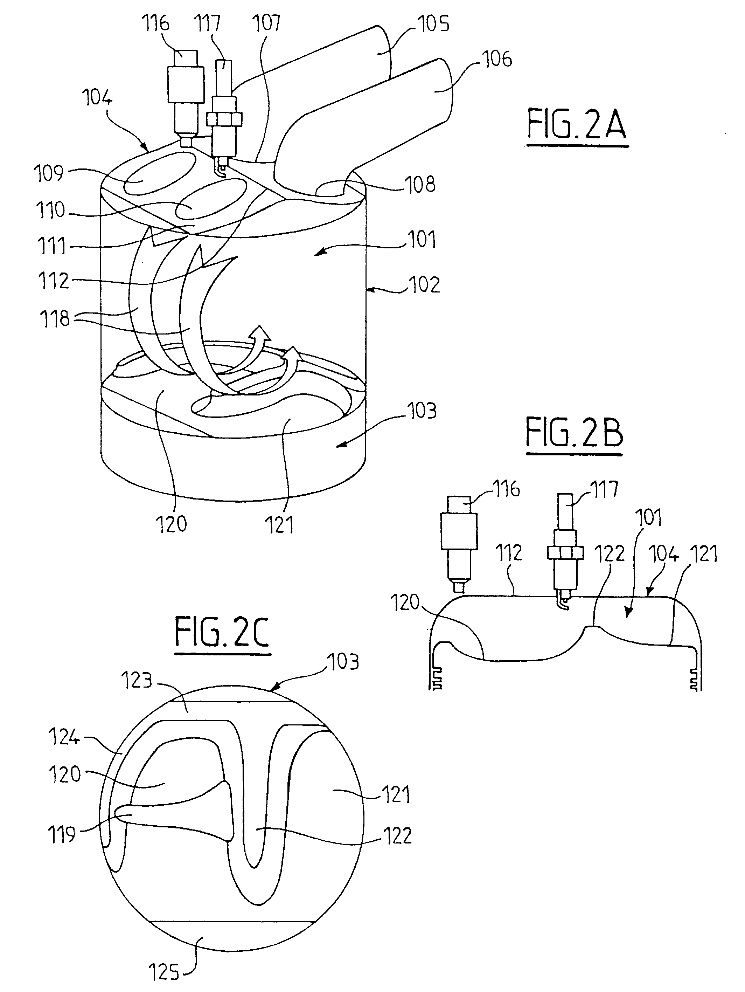

Dans la variante illsutrée sur les figures 2A à 2C, la chambre de combustion est de type partagé au niveau de la face supérieure du piston. Sur ces figures 2A à 2C, les éléments analogues ou ayant des fonctions analogues à ceux représentés sur les figures 1A à 1C ont des références augmentées de 100 par rapport aux références de ces mêmes éléments illustrés sur les figures 1A à 1C. A des fins de simplification, seules les différences entre les figures 2A à 2C et 1A à 1C seront maintenant décrites.

Afin d'assurer le caractère partagé de la chambre de combustion au niveau de la face supérieure du piston, cette face supérieure comporte une première cavité excentrée 120 située sous l'injecteur excentré 116 et sous la bougie centrée 117, et une deuxième cavité excentrée 121, séparée de la première cavité 120 par une paroi de séparation 122 décalée latéralement par rapport à la bougie 117. Cette paroi de séparation 122 s'étend sur la face supérieure du piston sensiblement perpendiculairement à l'arête 112 de l'élément de culasse en forme de toit.

Exception faite de la paroi de séparation 122, les deux cavités 120 et 121 forment une gouttière d'axe parallèle à l'arête 112 du toit 111, gouttière limitée latéralement et parallèlement à cette arête par deux parois latérales 123 et 125.

Les deux cavités 120 et 121 ont une forme lenticulaire et ont des caractéristiques géométriques différentes. La cavité 120, située sous l'injecteur et sous la bougie est en outre limitée par un élément de paroi périphérique 124 de la face supérieure du piston.

En mode stratifié, le jet d'essence 119 attaque sensiblement tangentiellement le bord de la première cavité excentrée 120 pour être ensuite défléchi vers la bougie 117 le long de la paroi de séparation 122.

Dans cette variante de réalisation, l'aréodynamique utilisée pour notamment permettre des gains en stabilité du moteur pour des points de fonctionnement en mélange pauvre homogène ou pour contrôler davantage la stabilité de la distribution du carburant sera, comme illustré sur la figure 2A par les flèches 118, de type "tourbillon" d'axe perpendiculaire à l'axe du cylindre, communément désigné par l'homme du métier sous le vocable "tumble" en langue anglaise. Ce mouvement tourbillonnaire d'axe horizontal peut être obtenu par un moteur comportant par exemple une cale à boisseau rotatif venant obturer la demi-partie inférieure des conduits d'admission, cale intercalée entre la culasse et le collecteur d'admission. Par ailleurs, la paroi centrale de séparation 122 est avantageusement profilée afin de minimiser les perturbations engendrées par sa présence sur le mouvement de rotation de type "tumble". En outre, la face supérieure du piston en forme de gouttière (si l'on fait abstraction de la paroi de séparation 122), permet de stabiliser l'écoulement du type "tumble" en fin de compression.

Dans les deux variantes de l'invention qui viennent d'être décrites, les moyens permettant de régler l'aérodynamique dans la chambre de combustion sont rendus inopérants aux fortes charges en mode de fonctionnement à richesse 1 homogène.

## Revendications

1. Moteur à combustion interne à injection directe et allumage commandé, comprenant une chambre de combustion à bougie centrée et injecteur excentré, caractérisé par le fait qu'il comprend un élément de culasse (4) en forme de toit (11) dont l'arête (12) s'étend entre les orifices d'admission (7, 8) et les orifices d'échappement (9,10) avec l'injecteur excentré (16) débouchant dans la chambre (1) au niveau de l'arête, et par le fait qu'il comprend également un piston coulissant (3) dont la face supérieure comporte au moins une cavité excentrée (15) située sous l'injecteur (16) et la bougie (17).

2. Moteur selon la revendication 1, caractérisé par le fait que la face supérieure du piston ne comporte qu'une seule cavité excentrée (15).

3. Moteur selon la revendication 2, caractérisé par le fait que la cavité (15) est sensiblement une demi-sphère.

4. Moteur selon la revendication 1, caractérisé par le fait que la chambre de combustion est de type partagé au niveau de la face supérieure du piston (103).

5. Moteur selon la revendication 4, caractérisé par le fait que la face supérieure du piston (103) comporte une première cavité excentrée (120) située sous l'injecteur excentré (116) et la bougie centrée (117), et une deuxième cavité excentrée (121), séparée de la première cavité (120) par une paroi de séparation (122) décalée latéralement par rapport à la bougie (117) et s'étendant sur la face supérieure du piston sensiblement perpendiculairement à ladite arête (112) de l'élément de culasse (104).

6. Moteur selon la revendication 5, caractérisé par le fait que les deux cavités (120, 121) ont une forme lenticulaire.

7. Moteur selon la revendication 5 ou 6, caractérisé par le fait que la première cavité excentrée (120) est limitée par la paroi de séparation (122) et par un élément de paroi périphérique (124) de la face supérieure du piston.

8. Moteur selon l'une des revendications précédentes, caractérisé par le fait que l'injecteur (16; 116) est incliné par rapport au plan vertical contenant l'arête du toit (12; 112).
